(19) **Europäisches Patentamt**
**European Patent Office**
**Office européen des brevets**

(11) **EP 2 669 983 B1**

(12) **FASCICULE DE BREVET EUROPEEN**

(45) Date de publication et mention
de la délivrance du brevet:
**03.12.2014 Bulletin 2014/49**

(51) Int Cl.:
*H01M 8/04* *(2006.01)* *G01N 27/407* *(2006.01)*
*G01N 33/00* *(2006.01)* *H01M 8/06* *(2006.01)*
*H01M 8/10* *(2006.01)*

(21) Numéro de dépôt: **13168792.3**

(22) Date de dépôt: **22.05.2013**

(54) **Méthode d'optimisation de l'alimentation en combustible comprenant un composé carbonylé de l'électrode catalytique d'une pile à combustible**

Verfahren zur Optimierung der Zuführung eines Brennstoffs mit einer Carbonlyverbindung zur katalytischen Elektrode einer Brennstoffzelle

Method for the optimization of fuel supply comprising a carbonyl compound to the catalytic electrode of a fuel cell

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.05.2012 FR 1254923**

(43) Date de publication de la demande:
**04.12.2013 Bulletin 2013/49**

(73) Titulaire: **COMMISSARIAT A L'ENERGIE ATOMIQUE ET AUX ENERGIES ALTERNATIVES**
**75015 Paris (FR)**

(72) Inventeurs:
• **Passot, Sylvain**
  **38210 Tullins (FR)**
• **Lemaire, Olivier**
  **38490 Les Abrets (FR)**

(74) Mandataire: **Esselin, Sophie et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A1- 0 911 898     JP-A- 6 044 995**
**US-A- 5 925 476**

• **J.ZHANG AND AL: "Influence of anode flow rate and cathode oxygen pressure on CO poisoning of proton exchnage membrane fuel cells", JOURNAL OF THE ELECTRICHEMICAL SOCIETY, vol. 149, no. 6, 25 avril 2002 (2002-04-25), pages A765-A772, XP002692554, DOI: 10.1149/1.1475686**
• **SHIMSHON GOTTESFELD ET AL: "A NEW APPROACH TO THE PROBLEM OF CARBON MONOXIDE POISONING IN FUEL CELLS OPERATING AT LOW TEMPERATURES", 1 octobre 1988 (1988-10-01), JOURNAL OF THE ELECTROCHEMICAL SOCIETY, ECS, PAGE(S) 2651 - 2652, XP000147427, ISSN: 0013-4651 * le document en entier ***

Printed by Jouve, 75001 PARIS (FR)

**Description**

Le domaine de l'invention est celui des piles à combustible à membrane échangeuse de protons, couramment dénommés par l'acronyme « PEMFC » correspondant au terme anglais : « Proton Exchange Membrane Fuel cell ».

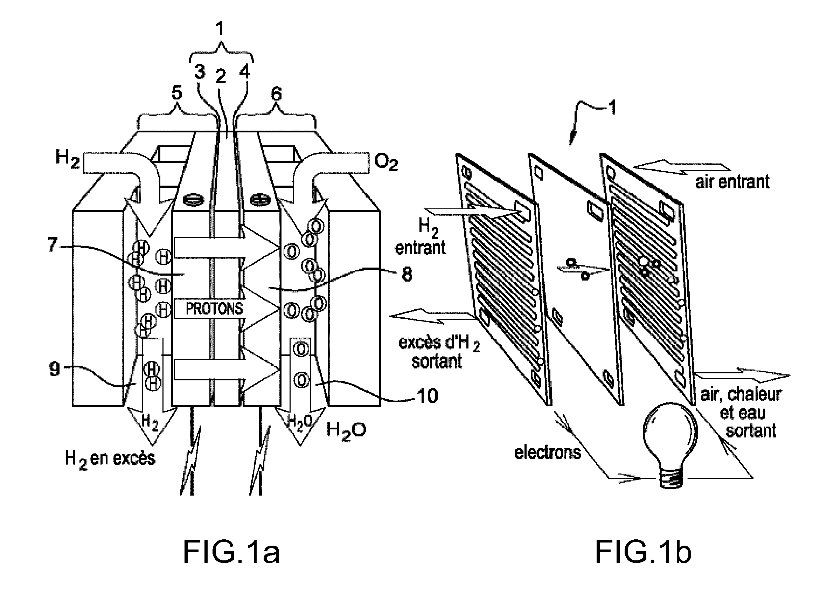

Les PEMFC sont des générateurs de courant dont le principe de fonctionnement repose sur la conversion de l'énergie chimique en énergie électrique par réaction catalytique de l'hydrogène et de l'oxygène. Les assemblages membrane-électrodes (AME) appelés communément coeurs de pile constituent les éléments de base des PEMFC. Ils sont composés d'une membrane polymère et de couches catalytiques présentes d'un côté et de l'autre de la membrane. La membrane permet donc de séparer les compartiments anodique et cathodique. Les couches catalytiques sont généralement constituées de nano-particules de platine supportées sur des agrégats de carbone (généralement du noir de carbone). Des couches de diffusion gazeuse (tissu de carbone, feutre...) sont disposées de part et d'autre de l'AME pour assurer la conduction électrique, l'arrivée homogène des gaz réactifs et l'évacuation de l'eau produite. A l'anode, la décomposition de l'hydrogène adsorbé sur le catalyseur produit des protons $H^+$ et des élections $e^-$. Les protons traversent ensuite la membrane polymère avant de réagir avec l'oxygène à la cathode. La réaction des protons avec l'oxygène à la cathode conduit à la formation d'eau et à la production de chaleur comme représenté en figures 1 a et 1 b.

En fonction de la méthode de production d'hydrogène, le gaz peut comporter des impuretés. Il a été montré que le monoxyde de carbone et les composés soufrés sont particulièrement néfastes pour le fonctionnement de la pile. Dans ce contexte, des seuils de concentrations maximales ont été proposés pour normaliser la qualité de l'hydrogène utilisé pour les piles à combustible dans le cas d'une application automobile : par exemple, 0,2 $\mu$mol/mol pour le CO et 0,004 $\mu$mol/mol pour les composés soufrés. Ces valeurs proposées en comité technique de normalisation peuvent évoluer.

Dans le cas d'une production de l'hydrogène par reformage, le CO est l'impureté majoritairement présente.

Concernant l'impact du CO sur les performances d'une électrode pour PEMFC, il est largement reconnu que le CO est un poison pour les catalyseurs à base de platine. En effet, cette molécule s'adsorbe très fortement sur les sites catalytiques, les rendant ainsi inactifs. Les piles à combustibles de type PEM utilise couramment des catalyseurs à base de platine. L'alimentation d'une pile PEM par de l'hydrogène reformé pouvant contenir des traces de CO entraine une perte de performance de la pile. Cette perte de performance est due à l'empoisonnement des sites catalytiques platinés de l'anode par le CO qui s'adsorbe (1) et empêche donc les étapes de la réaction de l'oxydation de l'hydrogène (2).

$$Pt + CO \rightarrow Pt - CO \tag{1}$$

$$\left.\begin{array}{l} Pt + H_2 \rightarrow 2Pt - H \\ Pt + H_2 \rightarrow Pt - H + H^+ + e^- \\ Pt - H \rightarrow Pt + H^+ + e^- \end{array}\right\} \tag{2}$$

La réaction globale de l'oxydation de l'hydrogène est donc la suivante :

$$H_2 \rightarrow 2H^+ + 2e^- \tag{3}$$

Plusieurs solutions ont d'ores et déjà été proposées pour réduire ou supprimer l'impact du CO sur les performances de l'électrode en facilitant l'oxydation du CO en $CO_2$ selon la réaction (4).

$$Pt - CO + H_2O \rightarrow Pt + CO_2 + 2H^+ + 2e^- \tag{4}$$

Solution concernant le fonctionnement à haute température :

Il a été rapporté que le fonctionnement d'une pile à combustible à une température de 90°C à 200°C permettait d'améliorer la tolérance au CO. Li *et al* ont rapporté une tolérance de 3% de CO dans l'hydrogène à 200°C comme décrit dans l'article de Q. Li, R. He, J.-A. Gao, J.O. Jensen, N.J. Bjerrum, J. Electrochem. Soc., 150 (2003) A1599-A1605.

Le fonctionnement de 90°C à 120°C réduit néanmoins la durabilité des AME. Le fonctionnement à des températures de 125°C à 200°C nécessitent l'utilisation de membranes autres que les membranes PFSA (perfluorosulfonic acid) couramment utilisées, comme par exemple les membranes PBI (polybenzimidazole). Ces membranes ont cependant le désavantage d'avoir une moins bonne conductivité protonique que les PFSA, les performances sont donc moins bonnes.

Solution concernant l'utilisation de catalyseur tolérant au CO :

Cette solution consiste à utiliser un catalyseur tolérant au CO comme par exemple l'alliage platine-ruthénium comme décrit dans l'article de E. Auer, W. Behl, T. Lehmann, U. Stenke, *Anode catalyst for fuel cells with polymer electrolyte membranes,* US006066410A, 2000.

Le CO s'oxyde à un potentiel plus bas sur l'alliage Pt-Ru que sur le platine pur permettant ainsi une régénération des sites catalytiques.

Bien que l'alliage Pt-Ru présente de meilleures performances en présence de CO, ce type de catalyseur présente des problèmes de durabilité notamment dus à la dissolution du ruthénium qui dégrade irréversiblement les performances.

Solution comportant l'ajout de traces d'oxygène dans l'hydrogène pour l'oxydation du CO, « l'air bleeding » :

Il a ainsi été proposé d'injecter une faible concentration d'oxygène dans le gaz combustible pour oxyder le CO et ainsi éviter l'empoisonnement des sites catalytiques comme décrit dans l'article de S. Gottesfeld, J. Pafford, J. Electrochem. Soc., (1988) 2651-2652.

Par exemple, 4,5 % d'oxygène dans de l'hydrogène contenant 100 ppm de CO permet d'oxyder tout le CO et ainsi d'avoir les mêmes performances qu'en hydrogène pur.

Cette méthode a cependant le désavantage d'augmenter le risque de dégradation des performances à cause de la présence d'oxygène à l'anode. En effet, la réduction de l'oxygène à l'anode est responsable des principaux phénomènes de dégradation des piles PEM (corrosion du carbone support à la cathode, dégradation chimique de la membrane, perte d'hydrophobicité des GDL : pour « Gas Diffusion layer »). Le brevet JP6044995 décrit une méthode d'optimisation d'alimentation en combustible d'une pile à combustible incluant la mesure de la teneur en monoxyde de carbone dans le combustible.

>

Dans ce contexte, la présente invention a pour objet une nouvelle solution permettant de limiter la perte de performance de l'électrode due à l'empoisonnement des sites catalytiques par le CO et ce en agissant sur les conditions de fonctionnement du système.

Plus précisément, la présente invention a pour objet une méthode d'optimisation de l'alimentation en combustible d'une électrode catalytique de pile à combustible comprenant une cellule comportant une membrane échangeuse de protons comprise entre ladite électrode catalytique et une autre électrode, et fonctionnant en sur-stoechiométrie, ledit combustible comprenant au moins un agent polluant de type composé carbonylé, ledit composé réagissant sur ladite électrode catalytique, **caractérisé en ce qu'il** comporte les étapes suivantes :

- la détermination d'une tension de référence de ladite cellule alimentée en présence de combustible exempt d'agent polluant ;
- la détermination d'une tension seuil correspondant à une tension de fonctionnement de ladite cellule, prédéterminée égale à un pourcentage de ladite tension de référence;
- la détermination d'une courbe d'étalonnage pour des conditions de fonctionnement données, reliant ladite tension seuil à un débit en agent polluant et permettant de définir un premier paramètre correspondant au débit en agent polluant ;
- la détection de la quantité d'agent polluant de manière à déterminer un second paramètre correspondant au taux d'agent polluant présent dans ledit combustible ;
- la détermination d'un coefficient stoechiométrique maximal dudit flux en combustible, en fonction des deux-dits paramètres, dans les conditions de fonctionnement données.

Selon une variante de l'invention, le combustible est à base d'hydrogène .

Selon une variante de l'invention, le combustible est à base d'hydrogène réformé.

Selon une variante de l'invention, le combustible comprend un agent polluant carbonylé pouvant être du CO.

Selon une variante de l'invention, la tension seuil est égale à environ 90% de la tension de référence.

Selon une variante de l'invention, les moyens de détection dudit agent polluant comprennent une sonde constituée d'une petite cellule PEM et alimentée par le flux de combustible.

Selon une variante de l'invention, les moyens de détection dudit agent polluant comprennent des moyens pour détecter des oscillations de tension de cellule permettant de définir le taux d'espèce polluante de type carbonyle.

L'invention sera mieux comprise et d'autres avantages apparaîtront à la lecture de la description qui va suivre donnée à titre non limitatif et grâce aux figures annexées parmi lesquelles :

- les figures 1a et 1b illustrent un schéma du principe de fonctionnement d'une pile à combustible PEMFC ;
- la figure 2 illustre l'évolution de la tension de cellule normalisée pendant l'exposition à 10 ppm de CO avec quatre coefficients stoechiométriques différents ;
- la figure 3 illustre la perte de performance en fonction du débit de CO ;
- la figure 4 illustre l'évolution du débit de CO en fonction de la stoechiométrie pour plusieurs concentrations de CO.

La présente invention propose ainsi une méthode permettant de faire face notamment à une pollution accidentelle en espèce carboxylée et notamment en monoxyde de carbone CO, assurant le fonctionnement possible d'une pile à hydrogène même en présence d'un taux élevé de CO.

En détectant le taux de CO en présence dans le combustible à base d'hydrogène, la présente invention propose d'adapter le coefficient stoechiométrique in situ du combustible de manière à ne pas dépasser un seuil de perte de performance prédéterminée acceptable.

De manière générale, dans la réaction d'oxydation de l'hydrogène, une molécule d'hydrogène produit 2 protons et 2 électrons. Le débit de flux d'hydrogène nécessaire pour établir un courant $I$ (en A) est donc donné par l'équation suivante :

$$Q_{H_2}(mol\ s^{-1}) = \frac{I}{2 \times F} \qquad (5)$$

avec $F$ la constante de Faraday (en A.s.mol$^{-1}$).

Dans les systèmes à piles à combustibles, l'hydrogène à l'anode et l'air (ou oxygène) à la cathode sont très souvent injectés en excès (fonctionnement en mode sur-stoechiométrique). Le flux d'hydrogène nécessaire à l'établissement du courant est donc multiplié par le coefficient stoechiométrique $St_{H_2}$ :

$$Q_{H_2}(mol\ s^{-1}) = St_{H_2} \times \frac{I}{2 \times F} \qquad (6)$$

Le coefficient stoechiométrique correspond à l'excès de gaz injecté. En hydrogène pur, le fonctionnement à une stoechiométrie forte, typiquement 1,5 permet d'avoir de l'hydrogène en excès et donc un meilleur accès au catalyseur améliorant ainsi les performances. Or en présence de CO dans l'hydrogène, une stoechiométrie forte augmente le débit de CO injecté et fait donc diminuer les performances. Le gain obtenu par une stoechiométrie forte est négligeable par rapport à la perte générer par la présence de CO.

Le Demandeur a montré qu'en optimisant une diminution du coefficient stoechiométrique en présence de CO dans l'hydrogène, l'impact sur les performances de l'électrode pouvait être contrôlé.

Cette solution peut être particulièrement efficace dans le cas d'un dysfonctionnement temporaire du dispositif de purification associé à un reformeur engendrant une concentration de CO anormalement élevée dans l'hydrogène.

Le choix de la stoechiométrie à adopter en présence de CO est dépendant d'un certain nombre de paramètres tels que la concentration de CO mesurée, le chargement en catalyseur à l'électrode ou la température de fonctionnement. Dans tous les cas, le but est de maintenir des performances acceptables (typiquement pertes de performances inférieures à 10 %). Les systèmes peuvent fonctionner à des stoechiométries différentes mais le Demandeur propose dans la présente invention que le fonctionnement associé à une pollution par le CO conduise à une optimisation du coefficient stoechiométrique.

Selon la présente invention, il est ainsi proposé à partir d'une tension dite de référence de fonctionnement de la pile correspondant à un fonctionnement considéré comme normal hors agent polluant, de se déterminer une valeur seuil de tension acceptable. Typiquement, il peut être considéré qu'une telle tension est de l'ordre de 90% de la tension de référence sans problème d'empoisonnement par un agent polluant.

A partir de cette tension seuil prédéfinie, on détermine un débit de flux de combustible chargé en agent polluant, par exemple un débit $Q_{CO}$ dans le cas d'agent polluant de CO, par courbe d'étalonnage, le débit ainsi déterminé correspondant à un premier paramètre d'entrée.

Par ailleurs, la solution de la présente invention, nécessite l'utilisation d'un dispositif de détection de CO dans l'électrode, afin de définir le second paramètre d'entrée.

Des moyens de détection de l'art connu peuvent être utilisés à cet effet.

On peut notamment faire référence à la méthode décrite dans le brevet de General Motors : S.A. Grot, M.A. Meltser, S. Gutowski, J.K. Neutzler, R.L. Borup, K. Weisbrod, *Method of monitoring CO concentrations in hydrogen feed to a PEM fuel cell,* US 6 063 516A, 2000 pour surveiller la concentration de CO dans l'hydrogène alimentant une pile PEM.

Dans ce moyen de détection, la surveillance de la concentration de CO est assurée par une sonde constituée d'une petite cellule PEM et alimentée par le même flux d'hydrogène que le reste de la pile. Cette cellule a une faible surface géométrique et un faible chargement en catalyseur permettant ainsi une bonne sensibilité pour la détection de la présence du CO. La perte de performance mesurée sur cette sonde est comparée à une librairie de données pour déterminer la concentration de CO présente.

Une autre méthode permettant la détermination de la concentration du CO a été proposée par le Demandeur, O. Lemaire, A. Franco, N. Guillet, *Dispositif de détermination de la concentration en monoxyde de carbone et procédé.* FR2937139A1, 2008. Cette méthode relie les caractéristiques des oscillations du potentiel observables dans le cas d'un mélange $H_2$/CO à la concentration de CO dans l'hydrogène également à partir d'une librairie de données.

## Exemple de réalisation :

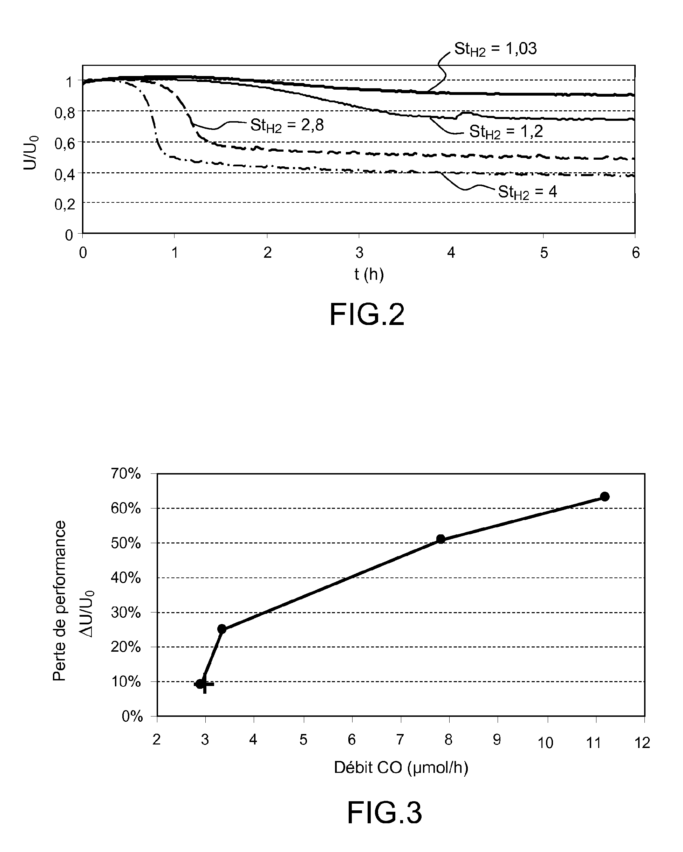

Quatre essais d'empoisonnement par 10 ppm de CO d'une électrode chargée à 300 $\mu g_{Pt}$/cm$^2$, avec des stoechiométries d'hydrogène différentes ont été réalisés à 70°C. Les valeurs de coefficients stoechiométriques pour l'hydrogène sont 1,03 / 1,2 / 2,8 et 4. La figure 2 présente les résultats de l'exposition de cette électrode au CO pendant 6 heures.

Une perte de performance similaire aurait pu être attendue (un palier à la même valeur de tension) pour toutes les valeurs de stoechiométrie dans la mesure où tous les essais sont faits avec 10 ppm de CO.

De même, une augmentation de la stoechiométrie aurait pu simplement diminuer le temps pour atteindre ce palier. Or, la figure 2 montre clairement que la stoechiométrie de gaz combustible a un très fort impact sur la perte de performance en présence de 10 ppm de CO.

En effet, plus le coefficient stoechiométrique est élevé, plus la perte de performance est importante et plus le palier est atteint rapidement.

La figure 3 présente la perte de performance due au CO en fonction des débits de CO déterminés avec 10 ppm de CO et quatre valeurs de stoechiométrie.

Dans les conditions d'essais déterminées par le Demandeur, la perte de performance devient inférieure à 10% lorsque le débit de CO est inférieur à 3 $\mu$mol/h. Il est ainsi possible à partir d'une tension seuil de 90% de la tension en fonctionnement hors agent polluant de définir le premier paramètre $Q_{CO}$ = 3 $\mu$mol/h.

Le détecteur employé permet d'accéder au second paramètre correspondant à la fraction molaire $x_{CO}$ de CO dans l'hydrogène (à partir d'un dispositif de mesure de la concentration de CO), le débit de CO est déterminé par l'expression suivante.

$$Q_{CO}(\mu mol/h) = \frac{x_{CO}}{1-x_{CO}} \times St_{H_2} \times \frac{I}{2 \times F} \times 3600 \times 10^6 \qquad (7)$$

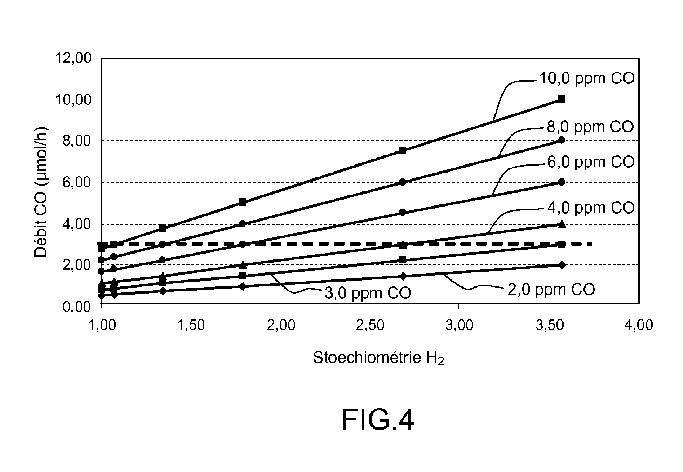

Cette expression permet d'obtenir la figure 4 qui relie la stoechiométrie que l'on cherche à optimiser en fonction de la concentration de CO prédéterminée et du débit de CO.

Ainsi, si l'opérateur souhaite avoir une tension de fonctionnement conditionnant un débit de CO inférieur à, par exemple, 3 $\mu$mol/h, il devra donc fixer la stoechiométrie en hydrogène entre 1 et par exemple :

- 3,57 si la concentration en CO mesurée est de 3 ppm,
- 2,68 si la concentration en CO mesurée est de 4 ppm,
- 1,79 si la concentration en CO mesurée est de 6 ppm,
- 1,34 si la concentration en CO mesurée est de 8 ppm,
- 1,07 si la concentration en CO mesurée est de 10 ppm.

A partir de cette méthode, si la mesure de CO n'est pas fixe mais augmente de manière dynamique, la stoechiométrie peut être automatiquement diminuée (tout en restant supérieure ou égale à 1) en fonction de la concentration mesurée et pour une valeur critique de débit de CO.

Cette méthode est également applicable avec des AME ayant des caractéristiques différentes (par exemple les chargements en catalyseur) et avec d'autres conditions opératoires (telle que la température de fonctionnement ou humidités relatives).

**Revendications**

1.  Méthode d'optimisation de l'alimentation en combustible d'une électrode catalytique de pile à combustible comprenant une cellule comportant une membrane échangeuse de protons comprise entre ladite électrode catalytique et une autre électrode, et fonctionnant en sur-stoechiométrie, ledit combustible comprenant au moins un agent polluant de type composé carbonylé, ledit composé réagissant sur ladite électrode catalytique, **caractérisé en ce qu'il** comporte les étapes suivantes :

    - la détermination d'une tension de référence ($U_0$) de ladite cellule alimentée en présence de combustible exempt d'agent polluant ;
    - la détermination d'une tension seuil (Us) correspondant à une tension de fonctionnement de ladite cellule, prédéterminée égale à un pourcentage de ladite tension de référence;
    - la détermination d'une courbe d'étalonnage pour des conditions de fonctionnement données, reliant ladite tension seuil (Us) à un débit en agent polluant ($Q_{CO}$) et permettant de définir un premier paramètre correspondant au débit en agent polluant ;
    - la détection de la quantité d'agent polluant de manière à déterminer un second paramètre correspondant au taux d'agent polluant présent dans ledit combustible ;
    - la détermination d'un coefficient stoechiométrique maximal dudit flux en combustible, en fonction des deuxdits paramètres, dans les conditions de fonctionnement données.

2.  Méthode d'optimisation de l'alimentation en combustible d'une électrode catalytique de pile à combustible selon la revendication 1, **caractérisé en ce que** le combustible est à base d'hydrogène .

3.  Méthode d'optimisation de l'alimentation en combustible d'une électrode catalytique de pile à combustible selon la revendication 1, **caractérisé en ce que** le combustible est à base d'hydrogène réformé.

4.  Méthode d'optimisation de l'alimentation en combustible d'une électrode catalytique de pile à combustible selon la revendication l'une des revendications 1 à 3, **caractérisée en ce que** le combustible comprend un agent polluant carbonylé pouvant être du CO.

5.  Méthode d'optimisation de l'alimentation en combustible d'une électrode catalytique de pile à combustible selon l'une des revendications 1 à 4, **caractérisé en ce que** la tension seuil est égale à environ 90% de la tension de référence.

6.  Méthode d'optimisation de l'alimentation en combustible d'une électrode catalytique de pile à combustible selon l'une des revendications 1 à 5, **caractérisée en ce que** les moyens de détection dudit agent polluant comprennent une sonde constituée d'une petite cellule PEM et alimentée par le flux de combustible .

7.  Méthode d'optimisation de l'alimentation en combustible d'une électrode catalytique de pile à combustible selon l'une des revendications 1 à 5, **caractérisée en ce que** les moyens de détection dudit agent polluant comprennent des moyens pour détecter des oscillations de tension de cellule permettant de définir le taux d'espèce polluante de type carbonyle.

**Patentansprüche**

1.  Verfahren zum Optimieren der Brennstoffversorgung einer katalytischen Elektrode einer Brennstoffzelle, die eine Zelle mit einer Protonenaustauschmembran umfasst, die sich zwischen der katalytischen Elektrode und einer anderen Elektrode befindet und superstöchiometrisch arbeitet, wobei der Brennstoff wenigstens einen Schadstoff des Carbonylverbindungstyps umfasst, wobei die Verbindung auf der katalytischen Elektrode reagiert, **dadurch ge-**

**kennzeichnet, dass** es die folgenden Schritte beinhaltet:

- Ermitteln einer Referenzspannung ($U_0$) der Zelle, wenn sie mit schadstofffreiem Brennstoff versorgt wird;
- Ermitteln einer Schwellenspannung (Us), die einer auf einen Prozentanteil der Referenzspannung vorher festgelegten Betriebsspannung der Zelle entspricht;
- Ermitteln einer Kalibrationskurve für gegebene Betriebsbedingungen, die die Schwellenspannung (Us) mit einem Schadstoffstrom ($Q_{CO}$) verbindet und die Definition eines ersten Parameters zulässt, der dem Schadstoffstrom entspricht;
- Erkennen der Schadstoffmenge, um einen zweiten Parameter zu bestimmen, der dem in dem Brennstoff vorhandenen Schadstoffanteil entspricht;
- Ermitteln eines maximalen stöchiometrischen Koeffizienten des Brennstoffstroms in Abhängigkeit von den zwei Parametern unter den gegebenen Betriebsbedingungen.

2. Verfahren zum Optimieren der Brennstoffversorgung einer katalytischen Elektrode einer Brennstoffzelle nach Anspruch 1, **dadurch gekennzeichnet, dass** der Brennstoff auf Wasserstoff basiert.

3. Verfahren zum Optimieren der Brennstoffversorgung einer katalytischen Elektrode einer Brennstoffzelle nach Anspruch 1, **dadurch gekennzeichnet, dass** der Brennstoff auf reformiertem Wasserstoff basiert.

4. Verfahren zum Optimieren der Brennstoffversorgung einer katalytischen Elektrode einer Brennstoffzelle nach einem der Ansprüche 1 bis 3, **dadurch gekennzeichnet, dass** der Brennstoff einen Carbonylschadstoff enthält, der CO sein kann.

5. Verfahren zum Optimieren der Brennstoffversorgung einer katalytischen Elektrode einer Brennstoffzelle nach einem der Ansprüche 1 bis 4, **dadurch gekennzeichnet, dass** die Schwellenspannung gleich etwa 90 % der Referenzspannung ist.

6. Verfahren zum Optimieren der Brennstoffversorgung einer katalytischen Elektrode einer Brennstoffzelle nach einem der Ansprüche 1 bis 5, **dadurch gekennzeichnet, dass** das Mittel zum Erkennen des Schadstoffs eine Sonde umfasst, die aus einer kleinen PEM-Zelle gebildet ist und mit dem Brennstoffstrom versorgt wird.

7. Verfahren zum Optimieren der Brennstoffversorgung einer katalytischen Elektrode einer Brennstoffzelle nach einem der Ansprüche 1 bis 5, **dadurch gekennzeichnet, dass** die Mittel zum Erkennen des Schadstoffs Mittel zum Erkennen von Zellenspannungsoszillationen beinhalten, die die Definition des Anteils an Schadstoffspezies des Carbonyltyps zulassen.

## Claims

1. A method for optimising the fuel supply of a catalytic electrode of a fuel cell comprising a cell including a proton exchange membrane located between said catalytic electrode and another electrode and operating in a super-stoichiometric manner, said fuel comprising at least one polluting agent of the carbonyl compound type, with said compound reacting on said catalytic electrode, **characterised in that** it comprises the following steps:

- determining a reference voltage ($U_0$) of said cell when supplied with fuel that is free from polluting agent;
- determining a threshold voltage (Us) corresponding to a predetermined operating voltage of said cell that is equal to a percentage of said reference voltage;
- determining a calibration curve for given operating conditions, which links said threshold voltage (Us) with a flow of polluting agent ($Q_{CO}$) and allows a first parameter to be defined that corresponds to the flow of polluting agent;
- detecting the quantity of polluting agent so as to determine a second parameter that corresponds to the proportion of polluting agent present in said fuel;
- determining a maximum stoichiometric coefficient of said fuel flow, as a function of said two parameters, in given operating conditions.

2. The method for optimising the fuel supply of a catalytic electrode of a fuel cell according to claim 1, **characterised in that** the fuel is based on hydrogen.

3. The method for optimising the fuel supply of a catalytic electrode of a fuel cell according to claim 1, **characterised in that** the fuel is based on reformed hydrogen.

4. The method for optimising the fuel supply of a catalytic electrode of a fuel cell according to any one of claims 1 to 3, **characterised in that** the fuel comprises a carbonyl polluting agent that can be CO.

5. The method for optimising the fuel supply of a catalytic electrode of a fuel cell according to any one of claims 1 to 4, **characterised in that** the threshold voltage is equal to approximately 90% of the reference voltage.

6. The method for optimising the fuel supply of a catalytic electrode of a fuel cell according to any one of claims 1 to 5, **characterised in that** said means for detecting said polluting agent comprise a probe formed of a small PEM cell and supplied with the fuel flow.

7. The method for optimising the fuel supply of a catalytic electrode of a fuel cell according to any one of claims 1 to 5, **characterised in that** said means for detecting said polluting agent comprise means for detecting cell voltage oscillations that allow the proportion of polluting species of the carbonyl type to be defined.

FIG.1b

FIG.1a

FIG.2

FIG.3

FIG.4

## RÉFÉRENCES CITÉES DANS LA DESCRIPTION

**Documents brevets cités dans la description**

- US 006066410 A
- JP 6044995 B
- US 6063516 A
- FR 2937139 A1
- FR 2008 A1

**Littérature non-brevet citée dans la description**

- **Q. LI ; R. HE ; J.-A. GAO ; J.O. JENSEN ; N.J. BJERRUM.** *J. Electrochem. Soc.,* 2003, vol. 150, A1599-A1605
- **S. GOTTESFELD ; J. PAFFORD.** *J. Electrochem. Soc.,* 1988, 2651-2652